# EUROPEAN PATENT APPLICATION

(11) **EP 4 722 643 A1**
(43) Date of publication of application: **08.04.2026**
(21) Application number: 25153631.4
(22) Date of filing: 23.01.2025
(51) Int. Cl.: G01B 11/25, B28D 1/00, G01N 21/88

(54) **STONE SLAB SCANNER FOR GENERATING A 3D SURFACE MAP OF A STONE SLAB SURFACE AND OPERATION METHOD THEREOF**

(30) Priority: 04.10.2024 PT 2024119754
(71) Applicant: D2 Technology Maquinas E Equipamentos Industrais Lda, 4730-320 Vila Verde (PT)
(72) Inventor: CARDOSO MACHADO, PAULO JORGE, 4990-179 PONTE DE LIMA (PT); ASEFI, SINA, 4990-017 PONTE DE LIMA (PT)
(74) Representative: Patentree

(57) **Abstract**

A three-dimensional, 3D, stone slab scanner and operation method thereof for generating a 3D surface map of a stone slab surface of a stone slab, comprising: a slidable scanning head which is slidable along the stone slab surface, and a computer data processor configured to generate a 3D surface map from detected surface height variations of the stone slab surface; wherein the slidable scanning head comprises: one or more cameras, and a laser configured to project a laser beam onto the stone slab surface for providing a positional reference to the one or more cameras; wherein the one or more cameras are configured for detecting the surface height variations of the stone slab surface from the projected laser beam.

## Description

### TECHNICAL FIELD

The present disclosure relates to a large-scale 3D stone slab scanner apparatus, method of operation and computer program product thereof; in particular wherein the stone slab is for example marble, rock, granite, among others.

### BACKGROUND

In the manufacturing process of large stone slabs, variations in thickness and flatness are common challenges. These inconsistencies make the cutting process difficult, particularly when precision is required, such as for 45-degree angle cuts that are often needed for joint bonding. The variations in the slab's physical properties must often be assessed manually at the time of cutting, slowing down the workflow and increasing the likelihood of errors. Additionally, many cutting machines are not equipped to automatically detect and adjust for these discrepancies, leading to manufacturing defects and reducing overall efficiency. As a result, the current process requires manual intervention and expertise, further complicating production and potentially increasing costs.

Document EP3650807A1 describes a handheld large-scale 3D measurement scanner system that combines both photography measurement and 3D scanning functions. It consists of two fixed cameras, at least one pattern projector, and modules for photography measurement and 3D scanning. One of the cameras is multifunctional, used for both photography measurement and 3D scanning. The photography measurement module captures global measurements of an object and determines the 3D coordinates of a marked point on the object's surface.

Current stone cutting solutions often react only at the final stages of the process, limiting the ability to make necessary adjustments in advance. This leads to potential defects, especially when dealing with variations in thickness and flatness of stone slabs. As a result, machines are unable to anticipate and adapt cutting parameters dynamically, which can result in inaccurate cuts, wasted material, and time-consuming manual intervention. There is a clear need for a system that can proactively address these variations, allowing for more accurate and efficient stone cutti ng.

These facts are disclosed in order to illustrate the technical problem addressed by the present disclosure.

### GENERAL DESCRIPTION

An aspect of the present disclosure involves a large-scale 3D stone scanner apparatus for generating a cutting map of a stone slab. The apparatus comprises one or more cameras, preferably two or three, arranged in a triangulation configuration to detect height variations on the slab's surface. Additionally, a laser is employed to generate data points, which serve as a reference for the cameras to accurately measure the slab's surface. By scanning the stone slab before cutting, the system creates a detailed surface map, enabling the calculation of the optimal cutting plane in advance. This solution overcomes the limitations of existing methods by allowing adjustments prior to cutting, ensuring precision, reducing errors, and improving efficiency.

The solutions in the market normally only react during the final stages before cutting, preventing adjustments that could prevent manufacturing defects. The apparatus of the present disclosure combines a 3D scanner equipped with advanced technology to create a detailed surface map of the stone slab before the cutting process begins. The apparatus and method of the present disclosure allows to anticipate and calculate the optimal cutting plane in advance, ensuring more precise cuts, reducing errors, and increasing efficiency.

By integrating the scanning technology of the present disclosure, the solution provides real-time data that enables machines to adjust cutting parameters automatically, improving the overall accuracy and quality of the process while minimizing manual intervention.

It is disclosed a three-dimensional, 3D, stone slab scanner for generating a 3D surface map of a stone slab surface of a stone slab, comprising:
a slidable scanning head which is slidable along the stone slab surface, and
a computer data processor configured to generate a 3D surface map from detected surface height variations of the stone slab surface;
wherein the slidable scanning head comprises:
   one or more cameras, and
   a laser configured to project a laser beam onto the stone slab surface for providing a positional reference to the one or more cameras;
wherein the one or more cameras are configured for detecting the surface height variations (i.e. thickness variations) of the stone slab surface from the projected laser beam.

In an embodiment, the slidable scanning head is slidable along a longitudinal axis of the stone slab surface or a transversal axis of the stone slab surface, wherein the longitudinal axis is an axis along a greater dimension of the stone slab surface and the transversal axis is an axis that is perpendicular with the longitudinal axis of the stone slab surface. This has the effect of being a practical efficient setup for scanning a stone slab which is obviously a very hefty object.

In an embodiment, the one or more cameras are configured in a triangulation setup for detecting the surface height variations of the stone slab surface from the projected laser beam as the slidable scanning head slides along the stone slab surface. This has the effect that as the slidable scanning head moves along the stone slab surface, height variations in the stone slab surface can be triangulated from deviations of the laser beam. Preferably, the one or more cameras have a lateral offset relative to the projected laser beam so that the height variations can be better triangulated.

An embodiment comprises two or more cameras configured to have adjacent fields of view or overlapping fields of view. This has the effect that an elongated scanning zone can be efficiently imaged.

An embodiment comprises a sliding mechanism for guiding the slidable scanning head along the stone slab surface, in particular the sliding mechanism comprises a rail and dolly, a linear guide bearing, or a linear slide bearing, in particular the sliding mechanism comprising a sliding motor for sliding the slidable scanning head (5) along the stone slab surface.

In an embodiment, the laser is configured to project a laser beam onto the stone slab surface for indicating a peripherical contour of the stone slab surface to the one or more cameras, the one or more cameras are configured for detecting the peripherical contour of the stone slab surface from the projected laser beam, and the computer data processor is configured to generate a peripherical contour map from detected peripherical contour of the stone slab. This enables the computer data processor to determine where the exact shape and size of the slab surface, dispensing with image recognition methods or the like.

In an embodiment, the laser is configured to project a laser beam grazing the stone slab surface, in particular a laser beam at a grazing angle relative to the stone slab surface of 20° or less, preferably 10° or less, more preferably 5° or less. This has the effect of amplifying surface variations and facilitating their detection.

In an embodiment, the computer data processor is configured to provide a thickness of the stone slab from the projected laser beam. When surface height variations are detected, the height (i.e. its thickness) of the sone slab itself can be determined.

In an embodiment, the computer data processor is configured to an initial and/or final sliding position of the slidable scanning head for scanning substantially the whole stone slab surface.

An embodiment comprises a support for supporting the stone slab, in particular comprising an adjustable lower base to adjust the position of the stone slab on the support.

In an embodiment, the computer data processor is configured for capturing an image of the stone slab surface.

In an embodiment, the laser beam is a line projected onto the stone slab surface or the laser beam is a set of points arranged on a line on the stone slab surface, in particular the line being perpendicular to an axis along which the slidable scanning head is slidable, further in particular when the slidable scanning head is slidable along a longitudinal axis of the stone slab surface, the line is along a transversal axis, or when the slidable scanning head is slidable along a transversal axis of the stone slab surface, the line is along a longitudinal axis.

In an embodiment, the computer data processor is configured to calculate one or more optimal cutting planes and/or cutting parameters from the 3D surface map for cutting the stone slab.

It is also disclosed a method for operating the three-dimensional, 3D, stone slab scanner of any of the disclosed embodiments for generating a 3D surface map of a stone slab surface of a stone slab comprising the steps of:
sliding the slidable scanning head along the stone slab surface while projecting the laser beam onto the stone slab surface and while using the or more cameras for detecting the surface height variations of the stone slab surface from the projected laser beam; and
using a computer data processor for generating a 3D surface map from detected surface height variations of the stone slab surface.

It is also disclosed a computer program product embodied in a non-transitory computer-readable medium comprising computer program instructions which, when executed by the computer data processor, causes the computer data processor to operate the three-dimensional, 3D, stone slab scanner of any of the disclosed embodiments for generating a 3D surface map of a stone slab surface of a stone slab.

An aspect of the present disclosure relates to a large-scale 3D stone scanner apparatus for obtaining a cutting map of a stone slab comprising: one or more cameras configured in a triangulation setup to detect surface height variations; a line laser configured to project onto the slab's surface, providing positional reference data to the cameras; a data processing module that generates a 3D surface map based on the detected surface height variations.

In an embodiment, the scanner, with a laser line projector, operates by moving either vertically and/or horizontally across the stone slab, capturing an image that is compared with a laser beam to create a precise map of points. The laser line projector emits a thin line of light across the surface of the object. This line acts as a reference, illuminating a cross-section of the object. As the laser line strikes the object, it "deforms" according to the surface's shape and thickness, revealing contours along the line.

The apparatus of the present disclosure employs the line laser along with one or more cameras to form a triangulation, enabling the detection of height variations on the slab's surface. The cameras are positioned at different angles, each capturing images of the laser line as it appears on the surface of the object. By observing the laser line from various perspectives, the cameras can calculate the depth and shape of the line based on stereoscopic disparity (the difference in the position of the laser line in the two images). Therefore, with the laser line and the cameras, triangulation can be used to measure the distance from the cameras to each point along the line.

The laser alone does not generate the point data, but rather serves as a reference for the cameras, helping to accurately determine its position relative to the surface. Each camera captures the 2D coordinates of the laser line as it appears on the surface. The disparity between where each camera views the line allows the system to triangulate the position of each point along the line in 3D space. Since the cameras are calibrated with respect to each other and the laser, the distance (thickness) of the object at each point on the line can be calculated based on the triangulation data. By knowing the distance between the two cameras and the angle of the laser line, the exact thickness at any given point along the line can be derived. This approach allows the apparatus and method of the present disclosure to provide detailed measurements, ensuring a higher degree of precision in the cutting process.

In an embodiment, the scanner moves vertically or horizontally across the surface of the slab to capture an image of the stone slab.

In an embodiment, wherein the system calculates an optimal cutting plane in advance based on the 3D surface map of the surface, ensuring more precise cuts and reducing manufacturing errors.

In an embodiment, further comprising a real-time data processing unit that automatically adjusts cutting parameters based on the 3D surface map.

The apparatus and method of the present disclosure also provides advantageous properties. In particular:
The solution improves the accuracy of stone slab cuts by detecting surface variations before the cutting process;
The solution has the ability of identify surface irregularities early on allowing for precise planning and adjustments to cutting parameters.
The solution enables necessary corrections in the digital photographic plan and machine code to ensure precise cuts.
The process and method introduce a more efficient control process within the quality assurance workflow for stone slabs, reducing errors in production and increasing overall product quality.

In an embodiment, when the laser line is projected onto the surface, said laser appears at a specific point relative to the cameras. Once the scanner starts scanning, if the thickness of the plate changes, the line will automatically adjust. With these line position oscillations, the software developed enables the registration of these points, converting the Cloud Point into an XML file, which can then be used in the subsequent cutting project. The thickness is derived at any point along the scanned line of the surface of the slab stone, by knowing the distance between the cameras and the angle of the laser line.

Where an apparatus feature is described as being operable to provide a function, it will be appreciated that this includes an apparatus feature which provides that function or which is adapted or configured to provide that function.

Where elements are described as being connected or connectable, they may be directly connected. Where elements are described as being coupled or coupleable, they may be linked by one or more intervening or interposing elements.

### BRIEF DESCRIPTION OF THE DRAWINGS

The following figures provide preferred embodiments for illustrating the disclosure and should not be seen as limiting the scope of invention.
**Figure 1**: Schematic representation of a perspective view of an embodiment of the large-scale 3D stone slab scanner of the present disclosure.
**Figure 2****:** Schematic representation of a perspective view of part of an embodiment of the large-scale 3D stone slab scanner of the present disclosure.
**Figure 3****:** Schematic representation of a perspective view of a detail **A**, shown in **Figures 1** and **2****,** of an embodiment of the large-scale 3D stone slab scanner of the present disclosure.
**Figure 4****:** Schematic representation of a cross-section view of an embodiment of the large-scale 3D stone slab scanner of the present disclosure.

### Reference list

1 - 3D stone slab scanner
2 - Support for supporting stone slabs
3 - Stone slab
4 - Sliding mechanism
5 - Slidable scanning head
6 - Load-bearing stand
7 - Sliding motor
8 - Laser
9 - Limit switch (switch for end of sliding course)
10- Illuminator
11 - Adjustable lower base for the stone slab
12 - Camera(s)
13 - Frame of the slidable scanning head
14 - Computer
15 - Cable chain
a - Distance between neighbouring cameras
b - Distance between cameras and the stone slab
A - Detail showing the lower portion of the slidable scanning head

### DETAILED DESCRIPTION

The present disclosure relates to a large-scale 3D stone slab scanner apparatus, method of operation and uses thereof, in particular scanning a slab of rock material, for example marble, stone, granite.

The present disclosure includes a three-dimensional, 3D, stone slab scanner and operation method thereof for generating a 3D surface map of a stone slab surface of a stone slab, comprising: a slidable scanning head which is slidable along the stone slab surface, and a computer data processor configured to generate a 3D surface map from detected surface height variations of the stone slab surface; wherein the slidable scanning head comprises: one or more cameras, and a laser configured to project a laser beam onto the stone slab surface for providing a positional reference to the one or more cameras; wherein the one or more cameras are configured for detecting the surface height variations of the stone slab surface from the projected laser beam.

The present disclosure relates to a large-scale 3D stone scanner apparatus for obtaining a cutting map of a stone slab comprising: one or more cameras configured in a triangulation setup to detect surface height variations; a line laser configured to project onto the slab's surface, providing positional reference data to the cameras; a data processing module that generates a 3D surface map based on the detected surface height variations.

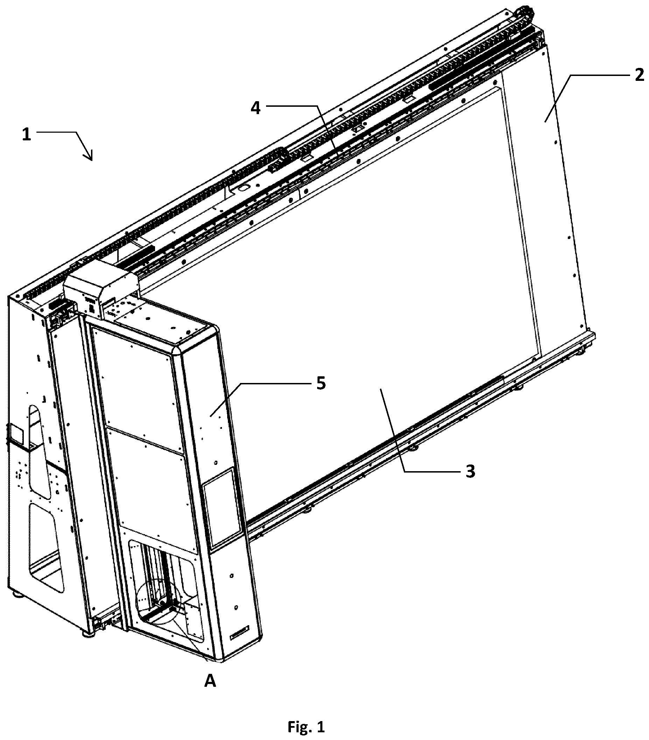

**Figure 1** shows a schematic representation of a perspective view of an embodiment of the large-scale 3D stone slab scanner of the present disclosure where: **1** represents large-scale 3D stone slab scanner of the present disclosure, preferably the main structure, **2** represents a support for supporting stone slabs, **3** represents a stone slab, **4** represents a sliding mechanism, **5** represents a slidable scanning head, and **A** represents the laser position.

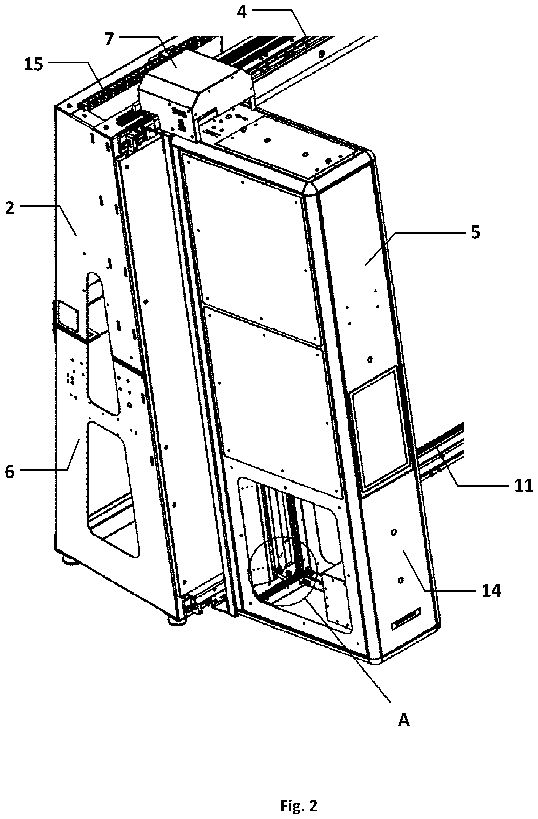

**Figure 2** shows a schematic representation of a perspective view of part of an embodiment of the large-scale 3D stone slab scanner of the present disclosure where: **2** represents a support for supporting stone slabs, **4** represents a sliding mechanism, **5** represents a slidable scanning head, **6** represents a load bearing stand, **7** represents a sliding motor, **11** represents an adjustable lower base for the stone slab, **14** represents a computer, **15** represents a cable chain, and **A** represents the laser position.

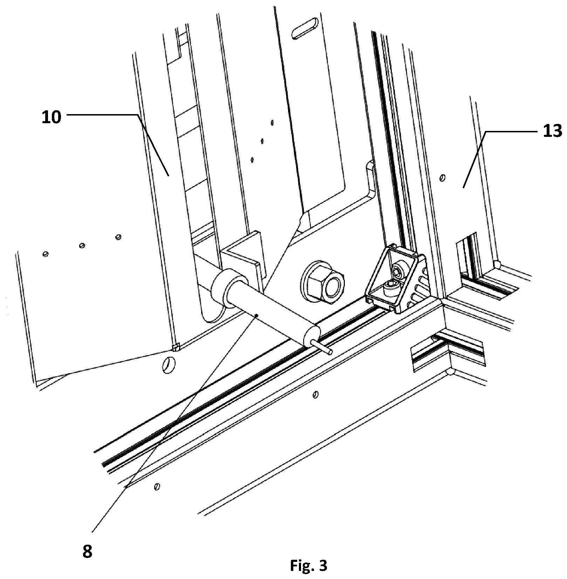

**Figure 3** shows a schematic representation of a perspective view of a detail **A,** shown in **Figures 1** and **2****,** of an embodiment of the large-scale 3D stone slab scanner of the present disclosure where: **8** represents a laser, **10** represents an illuminator, preferably one or more LED's, and **13** represents a frame of the slidable scanning head.

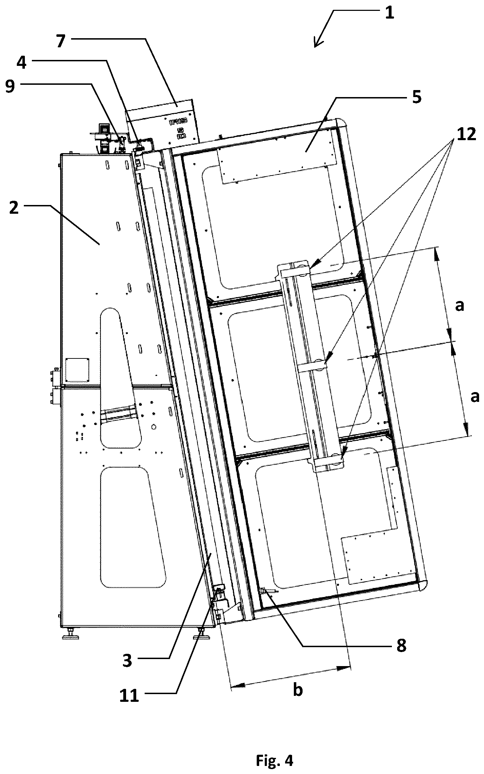

**Figure 4** shows a schematic representation of a cross-section view of an embodiment of the large-scale 3D stone slab scanner of the present disclosure where: **1** represents large-scale 3D stone slab scanner of the present disclosure, **2** represents a support for supporting stone slabs, **3** represents a stone slab, **4** represents a sliding mechanism, **5** represents a slidable scanning head, **7** represents a sliding motor **8** represents a laser, **9** represents limit switch (end of stroke), **11** represents an adjustable lower base for the stone slab, **12** represents the cameras, **a** represents the distance between neighbouring cameras, and **b** represents the distance between the cameras and the stone slab.

In a preferential embodiment of the disclosed 3D stone slab scanner, **1,** the slidable scanning head, **5,** encompassing the height of the stone slab, which comprises the cameras, **12,** the laser, **8,** as seen on **Figure 4****,** and an illuminator, **10,** as seen on **Figure 3****,** moves relative to support, **2,** that supports the stone slab, **3.** The movement is performed by a sliding motor, **7,** which is an electric motor that is coupled to a gearbox, which is then coupled to a sliding mechanism, **4.** The support for supporting stone slabs, **2,** also comprises more than one load-bearing stand, **6,** to withstand loads due to the weight of the stone lab, **3,** and the slidable scanning head, **5.**

In another embodiment of the disclosure, the slidable scanning head, **5,** moves relative to the support for supporting stone slabs, **2,** with the help of a linear guide, linear ball rails, linear cam rollers, linear bushings, translation screws, electric linear actuators and/or hydraulic linear or telescopic actuator, to name a few.

In another preferential embodiment, the cameras, **12,** present inside the slidable scanning head, **5,** can move vertically in relation both said scanning head and the stone slab being scanned, **3,** which is placed in the support for supporting stone slabs, **2.** This movement can be done with linear guide, linear ball rails, linear cam rollers, linear bushings, translation screws and/or electric linear actuators, among others.

In an alternative embodiment, the cameras, **12,** remain fixed in a frame, **13,** of the slidable scanning head, **5,** but are far enough that the combined fields of view of each camera, **12,** can detect any and all points of the laser array in the stone slab being scanned, **3,** and far enough that said cameras, **12** can capture focussed images of the stone slabs, **3.** For this, the distance between the cameras and the stone slab, distance **b** in **Figure 4****,** ranges from 500 mm to 750 mm, preferably from 600 mm to 650 mm. So that the entire width of the scanned area can be accurately measured, the distance between neighbouring cameras, distance **a** in **Figure 4****,** ranges from 400 mm to 750 mm, more preferably from 500 mm to 600 mm.

In an embodiment, the stone slab, **3,** can have a length ranging from 3 meters to 6 meters, preferably from 4 meters to 5 meters, and a width of 1 meter to 3 meters, preferably from 2 meters to 2.5 meters.

In another embodiment, the base, **11,** that supports the stone slab, **3,** is adjustable, allowing for an adjustment of the scanning area, which corresponds to the area of stone slab being scanned, **3.**

In order for the slidable scanning head, **5,** to remain confined to the scanning area of 3D stone slab scanner, **1,** limit switches, **9,** are placed at the end of the allowable sliding courses. Cables from these elements, as well as any other cables for the command circuit supply, power circuit supply, communication, control and data transfer between elements, pass through the cable chain, **15.**

In a preferential embodiment, the slidable scanning head, **3,** comprises the cameras, **12,** the laser, **8,** the computer, **14,** and the illuminator, **10,** which is preferably a set of LED lights. In said preferential embodiment, the laser is positioned in the lower portion of the slidable scanning head, **A,** as represented in **Figures 1** and **2****.**

In the aforementioned embodiments, a suitable laser emitter can be used to serve as a potential reference for the cameras to accurately measure the slab's surface, such as line laser modules from Apinex or Prophotonix, to name a few. Conversely, in the aforementioned embodiments, the combinations of laser array and cameras are able to perform measurement with a margin of error at or below 0.05 mm.

The computer, **14,** is configured to control any actuator that moves the slidable scanning head, **5,** via the sliding motor, **7,** as well as the cameras, **12,** the laser, **8,** and the illuminator, **10,** to command and acquire images from the stone slab, **3,** placed on the support for supporting stone slabs, **2.** Furthermore, this computer is configured to create a three-dimensional surface map from both the acquired images and the distance measurements from the laser **8,** and calculate the optimal cutting planes from the three-dimensional surface map of the stone slab, ensuring more precise cuts and reducing possible manufacturing errors. For example, EasySTONE^{™} CAD/CAM or ALPHACAM^{™} CAD/AM can be used for calculate the optimal cutting planes from the three-dimensional surface map of the stone slab.

A computer data processor, as used herein, refers to any system, device, or apparatus capable of processing data in accordance with the methods described in this disclosure. The computer data processor may include one or more processors, such as a central processing unit (CPU), a graphics processing unit (GPU), a digital signal processor (DSP), or any combination thereof. These processors may be implemented as a single chip, a multi-core processor, a distributed computing system, or any other suitable configuration. For example, this can be a central processing unit (CPU), such as an Intel^{®} Core^{™} i7 processor, and memory modules, including 16 GB of DDR4 RAM. The system may include a solid-state drive (SSD) for storage, an optional GPU (e.g., NVIDIA^{®} GeForce RTX^{™} 3060), and runs a standard operating system, such as Microsoft^{®} Windows^{®} or Linux^{®}. For example, this can be an embedded system utilizing a microcontroller, such as the ARM^{®} Cortex^{®}-M4 processor, with onboard memory (e.g., 1 MB of flash storage and 256 KB of SRAM). This system operates with real-time operating system (RTOS) software and can be integrated into an industrial device. For example, this can also be a cloud-based virtual machine hosted on a server infrastructure, such as an Amazon Web Services (AWS) EC2 instance, featuring virtual CPUs (vCPUs) based on Intel^{®} Xeon^{®} or AMD EPYC^{™} processors. The instance can be configured for example with 32 GB of RAM, 1 TB of elastic block storage (EBS), and executes server-side software designed to perform the computational processes disclosed in this specification.

The computer data processor may further include memory (e.g., random access memory (RAM), read-only memory (ROM), flash memory, or other suitable storage devices) for storing instructions and data. The processor executes instructions stored in memory to perform the functions described in this specification. The instructions may be implemented in any programming language, including but not limited to assembly language, C, C++, Python, or Java.

The computer data processor may communicate with input/output devices (e.g., a keyboard, mouse, touchscreen, or display), peripheral devices, or external systems via wired or wireless connections, such as USB, Bluetooth^{®}, Wi-Fi^{®}, or Ethernet. The data processor may also be integrated with or connected to a network, including a local area network (LAN), wide area network (WAN), or the internet, to receive and transmit data.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above-described embodiments are combinable. Further particular and preferred aspects are set out in the accompanying independent and dependent claims. Features of the dependent claims may be combined with features of the independent claims as appropriate, and in combinations other than those explicitly set out in the claims.

## Claims

1. A three-dimensional, 3D, stone slab scanner (1) for generating a 3D surface map of a stone slab surface of a stone slab (3), comprising:
a slidable scanning head (5) which is slidable along the stone slab surface, and
a computer data processor (14) configured to generate a 3D surface map from detected surface height variations of the stone slab surface;
wherein the slidable scanning head (5) comprises:
one or more cameras (12), and
a laser (8) configured to project a laser beam onto the stone slab surface for providing a positional reference to the one or more cameras (12);
wherein the one or more cameras (12) are configured for detecting the surface height variations of the stone slab surface from the projected laser beam.

2. The scanner according to the previous claim wherein the slidable scanning head (5) is slidable along a longitudinal axis of the stone slab surface or a transversal axis of the stone slab surface, wherein the longitudinal axis is an axis along a greater dimension of the stone slab surface and the transversal axis is an axis that is perpendicular with the longitudinal axis of the stone slab surface.

3. The scanner according to the previous claim wherein the one or more cameras (12) are configured in a triangulation setup for detecting the surface height variations of the stone slab surface from the projected laser beam as the slidable scanning head slides along the stone slab surface.

4. The scanner according to any of the previous claims comprising two or more cameras (12) configured to have adjacent fields of view or overlapping fields of view.

5. The scanner according to any of the previous claims comprising a sliding mechanism (4) for guiding the slidable scanning head along the stone slab surface, in particular the sliding mechanism (4) comprises a rail and dolly, a linear guide bearing, or a linear slide bearing, in particular the sliding mechanism comprising a sliding motor (7) for sliding the slidable scanning head (5) along the stone slab surface.

6. The scanner according to any of the previous claims wherein:
the laser (8) is configured to project a laser beam onto the stone slab surface for indicating a peripherical contour of the stone slab surface to the one or more cameras (12),
the one or more cameras (12) are configured for detecting the peripherical contour of the stone slab surface from the projected laser beam, and
the computer data processor (14) is configured to generate a peripherical contour map from detected peripherical contour of the stone slab.

7. The scanner according to any of the previous claims wherein the laser (8) is configured to project a laser beam grazing the stone slab surface.

8. The scanner according to any of the previous claims wherein the computer data processor (14) is configured to provide a thickness of the stone slab from the projected laser beam.

9. The scanner according to any of the previous claims wherein the computer data processor (14) is configured to an initial and/or final sliding position of the slidable scanning head for scanning substantially the whole stone slab surface.

10. The scanner according to any of the previous claims comprising a support (2) for supporting the stone slab (3), in particular comprising an adjustable lower base (11) to adjust the position of the stone slab on the support (2).

11. The scanner according to any of the previous claims wherein the computer data processor (14) is configured for capturing an image of the stone slab surface.

12. The scanner according to any of the previous claims, wherein the laser beam is a line projected onto the stone slab surface or the laser beam is a set of points arranged on a line on the stone slab surface.

13. The scanner according to any of the previous claims wherein the computer data processor (14) is configured to calculate one or more optimal cutting planes and/or cutting parameters from the 3D surface map for cutting the stone slab (3).

14. A method for operating the three-dimensional, 3D, stone slab scanner (1) of any of the previous claims for generating a 3D surface map of a stone slab surface of a stone slab (3) comprising the steps of:
sliding the slidable scanning head (5) along the stone slab surface while projecting the laser beam onto the stone slab surface and while using the one or more cameras (12) for detecting the surface height variations of the stone slab surface from the projected laser beam; and
using a computer data processor for generating a 3D surface map from detected surface height variations of the stone slab surface.

15. A computer program product embodied in a non-transitory computer-readable medium comprising computer program instructions which, when executed by the computer data processor (14), causes the computer data processor to operate the three-dimensional, 3D, stone slab scanner (1) of any of the preceding claims for generating a 3D surface map of a stone slab surface of a stone slab (3).
